(19) Europäisches Patentamt

European Patent Office

Office européen des brevets

(11) EP 0 987 824 A2

(12) **EUROPEAN PATENT APPLICATION**

(43) Date of publication:
22.03.2000 Bulletin 2000/12

(51) Int. Cl.⁷: **H04B 1/16**, H04B 7/04

(21) Application number: 99117932.6

(22) Date of filing: 14.09.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 14.09.1998 JP 25971098

(71) Applicant: **NEC CORPORATION**
**Tokyo (JP)**

(72) Inventor: **Ishii, Hiroyuki**
**Minato-ku, Tokyo (JP)**

(74) Representative:
**VOSSIUS & PARTNER**
**Siebertstrasse 4**
**81675 München (DE)**

(54) **Radio receiver using digital signal processing for reception and demodulation of wireless transmissions**

(57) A radio wave receiver realizes processing for reception and demodulation through software processing. Thus, the receiving and demodulating processing of communication waves of various wave formats can be carried out by changing a receiving and demodulating program corresponding to the target communication wave, using a single common hardware structure. Data change of the communication wave format or the advent of a new communication technique can also be dealt with by changing or adding a program.

FIG. 5

EP 0 987 824 A2

**Description**

The present invention relates to a radio wave receiver and, in particular, to a radio wave receiver which receives and demodulates communication waves of various wave formats through software processing using a single common hardware structure.

For receiving and demodulating communication waves of various wave formats, there have been used radio wave receivers each having demodulating circuits specialized for the respective wave formats.

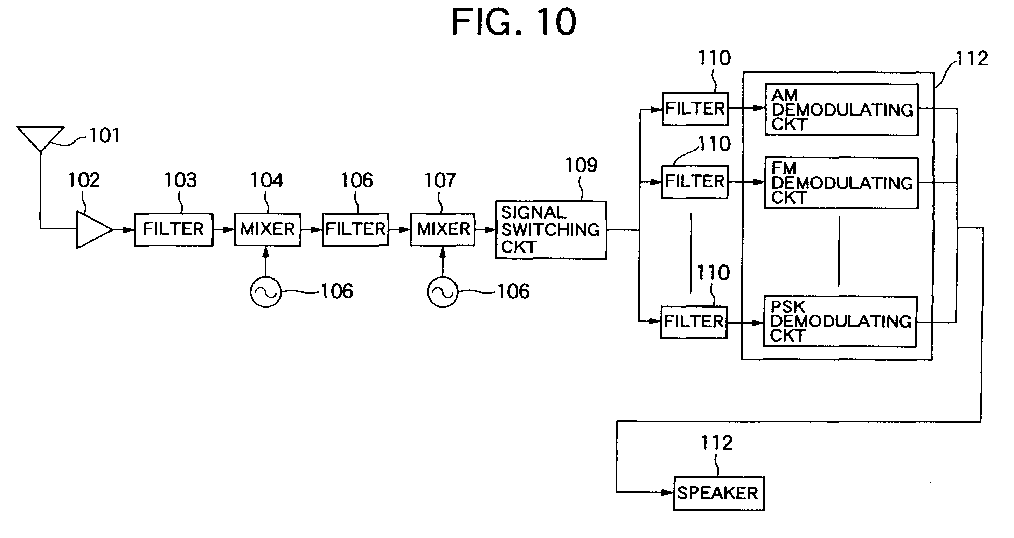

Fig. 10 shows a radio wave receiver in previous technique for receiving and demodulating communication waves of various wave formats. An antenna 101 receives communication waves transmitted in the real space. A signal amplifier 102 amplifies signal levels of the communication waves received via the antenna 101. Filters 103, 106 and 110 limit frequency bands of the signals. Mixers 104 and 107 are multipliers for converting frequencies of the inputted signals. A first local signal generator 105 and a second local signal generator 108 produce reference signals for converting the frequencies of the signals inputted into the mixers 104 and 107, respectively. A signal switching circuit 109 performs signal switching relative to a communication wave demodulating circuit 111 depending on a wave format of the received communication wave to be demodulated. The communication wave demodulating circuit 111 includes various demodulating circuits each capable of demodulating the communication wave of a corresponding wave format. A speaker 112 outputs demodulated signals from the communication wave demodulating circuit 111 as sound information.

Now, the operation of the radio wave receiver shown in Fig. 10 will be explained in more detail. The communication waves of various wave formats at high frequencies (radio frequencies) received via the antenna 101 are amplified in signal level by the signal amplifier 102 and then limited in frequency band by the filter 103. The band-limited communication waves are then multiplied by the reference signal of the first local signal generator 105 at the mixer 104. Subsequently, high-frequency components of the communication waves from the mixer 104 are removed at the filter 106. The communication waves converted to intermediate frequencies are then inputted into the mixer 107 where they are multiplied by the reference signal of the second local signal generator 108 so as to be converted to baseband frequencies. The signal switching circuit 109 implements signal switching relative to the communication wave demodulating circuit 111 depending on a wave format of the inputted communication wave to be demodulated. The filter 110 performs signal band limitation depending on a signal bandwidth of the communication wave to be demodulated. The band-limited communication wave is demodulated by corresponding one of the demodulating circuits in the communication wave demodulating circuit 111 so as to be outputted by the speaker 112 as demodulated sound information (in case of sound information).

The foregoing radio wave receiver, however, has the following problems:

The first problem is that since the plurality of demodulating circuits corresponding to the respective wave formats are required, a scale of the receiver is increased. The reason thereof is that the demodulating circuits specialized for the respective wave formats are used for constituting the receiver. The second problem is that when data of the target wave format changes or a communication wave of a new wave format appears, it is difficult to change the function or performance of the receiver for matching thereto. The reason thereof is that since the receiver has the hardware structure (filters, demodulating circuits, etc.) specialized for the respective wave formats, it is difficult to change it.

The third problem is that the reception performance may be adversely affected by changes of the external environment. The reason thereof is that since many analog parts are used for the receiving and demodulating processing, the characteristics of those analog parts may fluctuate due to the changes of the external environment.

The fourth problem is that it is impossible to change the reception characteristic depending on the receiving wave environment. The reason thereof is that since the receiver has the receiving structure specialized for the target wave formats, it is not easy to change the structure and the reception characteristic thereof.

The fifth problem is that the size reduction of the receiver and the integration of the receivers are difficult. The reason thereof is that since the demodulating circuits for the respective wave formats differ from each other, it is difficult to realize a single common circuit therefor.

It is therefore an object of the present invention to provide a structure of a radio wave receiver and a technique for implementing receiving and demodulating processing of communication waves of a plurality of wave formats using a single common architecture.

It is another object of the present invention to provide a technique for size reduction of a radio wave receiver which implements receiving and demodulating processing of communication waves of a plurality of wave formats, and a technique for integrating such radio wave receivers.

It is another object of the present invention to provide a technique for improving the performance of a radio wave receiver which implements receiving and demodulating processing of communication waves of a plurality of wave formats.

It is another object of the present invention to provide a technique for flexibly changing a function of a radio wave receiver.

It is another object of the present invention to provide a technique for simultaneously performing frequency down-conversion of a communication wave of high frequencies and quantization thereof.

It is another object of the present invention to provide a technique for reducing a calculation amount for signal processing in demodulation.

It is another object of the present invention to provide a technique for improving the long maintainability and reliability of a radio wave receiver.

It is another object of the present invention to provide a technique for improving operability of a radio wave receiver.

It is another object of the present invention to provide a technique for detecting and monitoring communication waves at high speed and wideband from the real space.

It is another object of the present invention to provide a structure of a radio wave receiver and a technique for analyzing wave data of an unknown communication wave received in the real space and automatically performing demodulation thereof.

It is another object of the present invention to provide a structure of a radio wave receiver and a technique for discriminating a communication device which has made a transmission, based on an unknown communication wave received in the real space.

It is another object of the present invention to provide a structure of a radio wave receiver and a technique for integrating functions for services of different kinds.

According to an aspect of the present invention, there is provided a radio wave receiver for carrying out reception and demodulation of communication waves of a plurality of wave formats. The radio wave receiver comprises performing means for performing the reception and the demodulation through software processing.

According to another aspect of the present invention, there is provided a radio wave receiver for carrying out reception and demodulation of communication waves of a plurality of wave formats. The radio wave receiver comprises performing means for performing the reception and the demodulation by the use of a single common hardware structure.

According to still another aspect of the present invention, there is provided a radio wave receiver which comprises means for monitoring a wideband radio wave environment and detecting means for detecting, as a detected signal, one of signals in the wideband radio wave environment.

According to yet another aspect of the present invention, there is provided a radio wave receiver comprising means for carrying out A/D conversion processing to simultaneously perform frequency conversion a received signal and quantization thereof.

According to a further aspect of the present invention, there is provided a radio wave receiver which comprises means for setting a speed for sampling, a frequency for orthogonal transform, a signal band limitation, and a signal decimation rate in accordance with a target one of communication waves, and means for flexibly producing clock signals required for the sampling and the orthogonal transform.

According to a still further aspect of the present invention, there is provided a radio wave receiver for use in radio wave environment having communication waves of a plurality of wave formats. The radio wave receiver comprises a single common hardware structure which is operable through software processing as each of means for receiving, a received signal, one of signals in the wideband radio wave environment, means for amplifying the received signal into an amplified signal, means connected to the amplifying means for quantizing and frequency-converting the amplified signal into a quantized and frequency-converted signal, means for frequency-converting the quantized and frequency-converted signal in orthogonal transform processing into an orthogonal-converted signal, means for band-limiting the orthogonal-converted signal into a band-limited signal, means for decimating the band-limited signal into a decimated signal, means for demodulating the decimated signal into a demodulated signal, means for digital-to-analog converting the demodulated signal into a digital-to-analog converted signal, and means for outputting the digital-to-analog converted signal as sound information.

Fig. 1 is a block diagram of a radio wave receiver according to a first preferred embodiment of the present invention;

Fig. 2 is a procedural diagram showing an operation of the radio wave receiver shown in Fig. 1;

Figs. 3A to 3D are diagrams for explaining an operation of an A/D converter incorporated in the radio wave receiver shown in Fig. 1;

Figs. 4A to 4D are diagrams for explaining an operation of an orthogonal transform circuit incorporated in the radio wave receiver shown in Fig. 1;

Fig. 5 is a block diagram showing the radio wave receiver shown in Fig. 1 in a more detailed fashion;

Fig. 6 is a block diagram of a radio wave receiver according to a second preferred embodiment of the present invention;

Fig. 7 is a block diagram of a radio wave receiver according to a third preferred embodiment of the present invention;

Fig. 8 is a procedural diagram showing an operation of the radio wave receiver shown in Fig. 7;

Fig. 9 is a block diagram of a radio wave receiver according to a fourth preferred embodiment of the present invention; and

Fig. 10 is a block diagram of a radio wave receiver in previous technique.

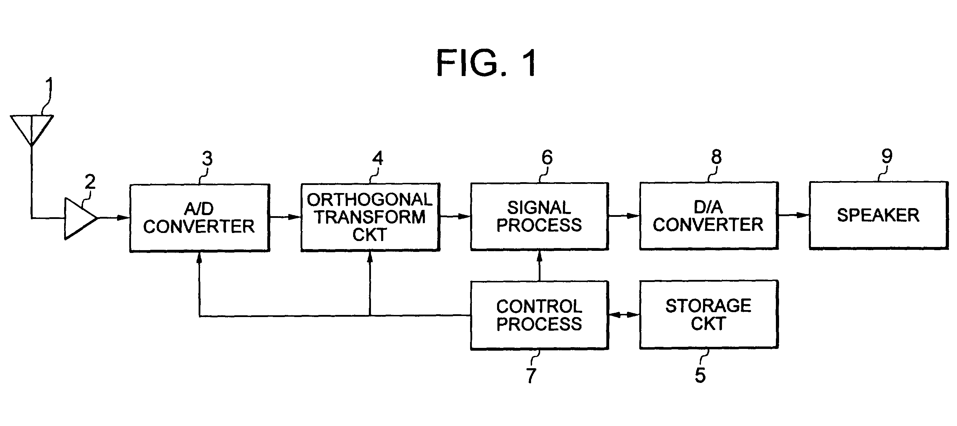

With reference to Fig. 1, description will be made as regards a configuration of a radio wave receiver according to the first preferred embodiment of the present invention.

In Fig. 1, the radio wave receiver comprises a receiving antenna 1 for receiving wideband communication waves of various wave formats transmitted in the real space, a signal amplifier 2 for amplifying the communication waves received via the antenna 1, an A/D converter 3 for performing quantization to convert an analog signal to a digital signal and further performing frequency conversion, an orthogonal transform circuit 4 for implementing orthogonal transform processing and signal band limitation of an inputted signal and further implementing data decimation for reducing the calculation amount in a signal processor 6, a storage circuit 5 storing programs for receiving and demodulating communication waves of various wave formats, the signal processor 6 for demodulating the communication wave using corresponding one of the programs stored in the storage circuit 5, a control processor 7 for controlling the sampling speed of the A/D converter 3, controlling the orthogonal transform frequency, the data decimation rate and the signal band limitation of the orthogonal transform circuit 4, and controlling download of the demodulating program for a corresponding wave format relative to the signal processor 6, a D/A converter 8 for converting a digital signal received and demodulated by the signal processor 6 into an analog signal, and a speaker 9 for outputting sound.

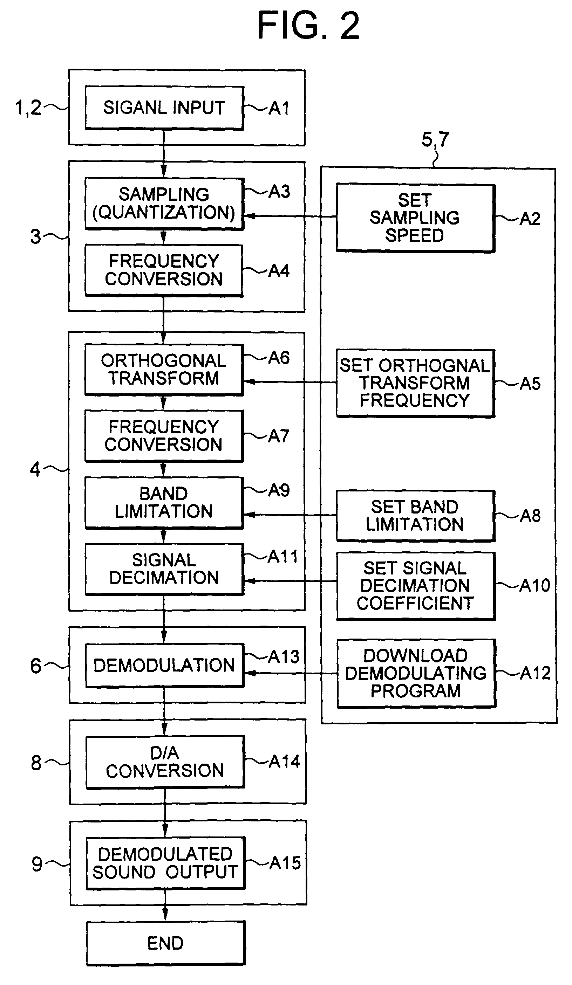

With reference to Fig. 2 together with Fig. 1, the description will be made as operation of the radio wave receiver shown in Fig. 1.

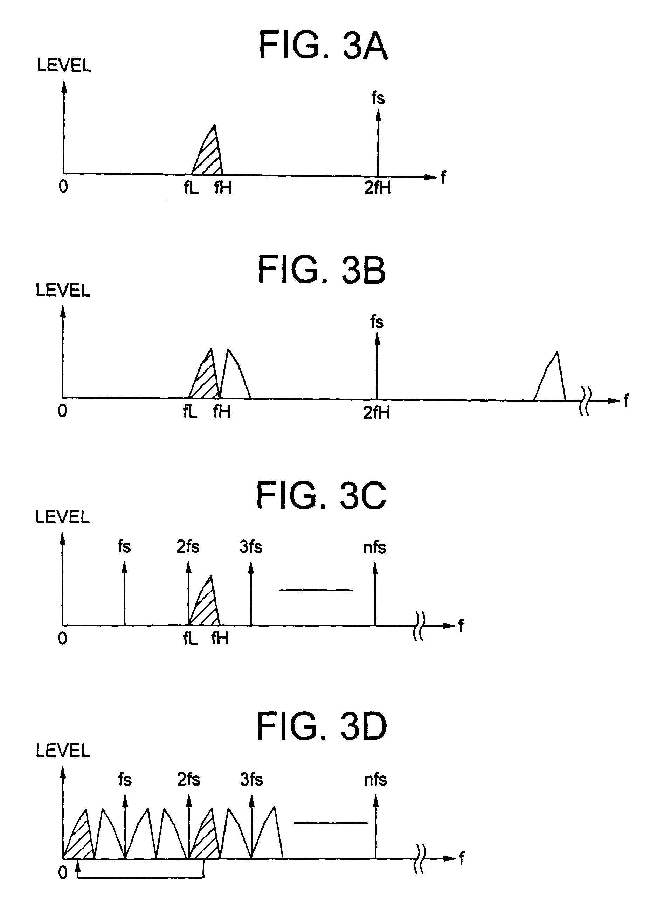

In Fig. 1, the communication waves in the real space are received at the antenna 1. The received communication waves are amplified by the signal amplifier 2 to the optimum input levels (e.g. ±1Vpp) of the A/D converter 3 and then inputted into the A/D converter 3. Although only the quantization is normally carried out in an A/D converter, the frequency conversion is simultaneously implemented in the A/D converter 3 in this embodiment. An operation thereof will be described in detail with reference to Figs. 3A to 3D.

Referring to Fig. 3A, when quantizing an inputted signal (lowest frequency fL; highest frequency fH), the quantization (sampling) speed should be set twice the highest frequency or higher for removing an influence of aliasing caused by quantization (sampling). Fig. 3B shows an operation when the sampling speed is set twice the highest frequency.

In this embodiment, the frequency conversion and the quantization of an inputted signal are simultaneously realized by executing sampling at a frequency fs lower than the inputted signal as shown in Fig. 3C and extracting duplication components at low frequencies of the inputted signal produced by aliasing caused by the sampling. The sampling speed condition for the quantization is given by:

$$\begin{cases} \mathtt{fL} > \mathtt{nfs} \\ (\mathtt{fH} - \mathtt{nfs}) < \dfrac{1}{2}\,\mathtt{fs} \end{cases}$$

wherein n represents an integer and depends on frequencies of an inputted signal).

It is seen from Fig. 3D that the inputted signal is converted in frequency as a result of sampling at the frequency fs lower than the lowest frequency fL of the inputted signal.

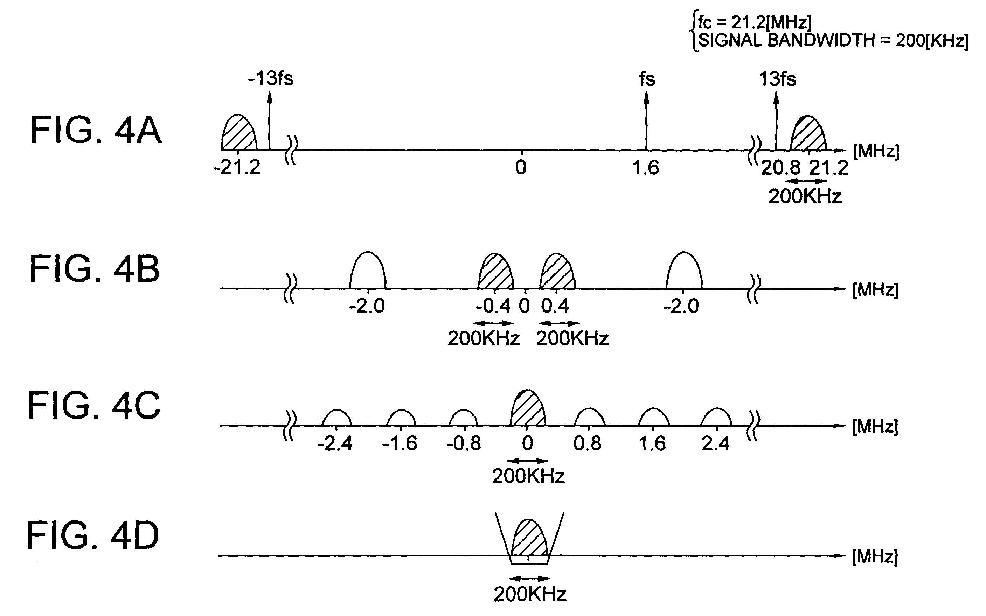

The signal subjected to the frequency conversion and the quantization at the A/D converter 3 is then subjected to orthogonal transform (I-Q separation) in a digital fashion at the orthogonal transform circuit 4 so as to be converted in frequency to a baseband. In this embodiment, by controlling the relation between the quantization and the frequency conversion implemented by the A/D converter 3 and the frequency conversion to the baseband in the orthogonal transform, the signal band limitation and the signal decimation implemented by the orthogonal transform circuit 4, the reduction in calculation amount of the signal processor 6 is achieved. The operation thereof will be described in detail with reference to Fig. 2 and Figs. 4A to 4D.

Referring to Fig. 4A, a signal having a center frequency of 21.2MHz and a signal bandwidth of 200KHz is inputted (A1), and the sampling speed in the A/D converter 3 is set to 1.6MHz (A2, A3). Then, due to the foregoing aliasing effect caused by the sampling, the inputted signal is converted to a signal having a center frequency of 0.4KHz and a signal bandwidth of 200KHz (A4) as shown in Fig. 4B. The signal is then multiplied by 1/4fsps sine and cosine waves in the orthogonal transform circuit 4 (A6) set by the control processor 7 (A5), so as to be converted to a baseband signal as shown in Fig. 4C. Then, as shown in Fig. 4D, only a signal at the baseband is extracted by band limitation processing (A8, A9). Since the sampling is performed at 1.6MHz relative to signal frequency components converted to the baseband, the signal decimation can be carried out (A11). The maximum decimation rate is achieved at the sampling speed which is twice the highest frequency of the signal band (A10). As a result, the calculation amount in the signal processing can be largely reduced as compared with a case wherein the processing is implemented relative to the highest frequency of the inputted signal. Parameters of the sampling speed, the orthogonal transform frequency, the decimation rate and the band limitation can be variably set by the control processor 7 (A2, A5, A8, A10). Thus, the flexibility of the radio wave receiver is also improved in this embodiment as compared with the radio wave receiver in previous technique.

The signal processor 6 is inputted with the signal which has been subjected to the foregoing calculation amount reduction processing. In the signal processor 6, one of the communication wave demodulating programs stored in the storage circuit 5 is downloaded under the direction of the control processor 7 (A12), so that the signal processor 6 executes demodulation processing of the signal according to the downloaded program (A13). The communication wave demodulating program is downloaded under the direction of the control processor 7 per wave format of the communication wave to be demodulated. With this arrangement, the signal demodulation realized by the plurality of demodulation circuits in the previous technique can be realized by the single common architecture in this embodiment. Specifically, in this embodiment, the receiving and demodulating processing of the communication waves of various wave formats is realized by combining the signal processing method for the foregoing calculation amount reduction and the demodulation method wherein the corresponding program is downloaded to implement the receiving and demodulating processing based on the software processing. The demodulated signal from the signal processor 6 is converted to an analog signal by the D/A converter 8 (A14) so as to be outputted from the speaker 9 as sound information (A15).

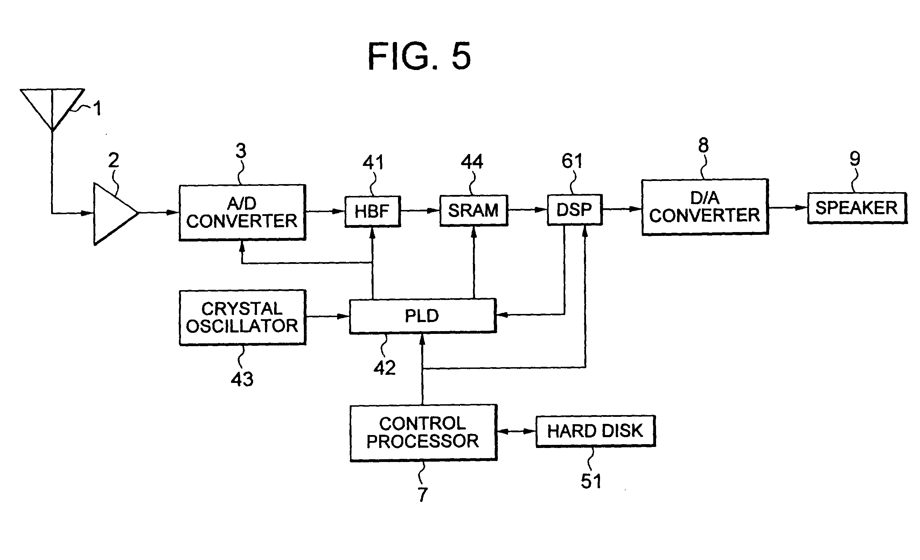

Now, the radio wave receiver shown in Fig. 1 will be described in more detail with reference to Fig. 5.

Referring to Fig. 5, the function of the orthogonal transform circuit 4 shown in Fig. 1 is realized by an HBF (Half Band Filter) 41. Other than the HBF, a DDC (Digital Down Converter) may also be used. A clock signal to be used in the orthogonal transform processing of the orthogonal transform circuit 4 and a clock signal to be used in the sampling of the A/D converter 3 are obtained by dividing a signal of a crystal oscillator 43 by means of a PLD (Programmable Logic Device) 42. The dividing rate of the PLD 42 is variably controlled by the control processor 7. An SRAM 44 is used for signal conversion (bit conversion) and timing adjustment relative to a DSP (Digital Signal Processor) 61 working as the signal processor 6.

The DSP 61 is capable of high-speed processing of the product-sum operation and can be used as the signal processor 6. It is preferable that a plurality of DSPs are arranged in parallel so as to speed up the processing depending on the signal processing amount required for demodulation of the communication wave to be demodulated. In the signal processing, it is preferable that the DSP is used along with a CPU such as a PPC (Power PC) when executing the logic operation. The storage circuit 5 shown in Fig. 1 is realized by a hard disk 51 in Fig. 5. A floppy disk, an MO disk or the like may also be used as an external storage medium.

Now, the operation of the radio wave receiver shown in Fig. 5 will be described in detail.

Referring to Fig. 5, one of the receiving and demodulating programs corresponding to a wave format of the communication wave to be demodulated is downloaded from the hard disk 51 under the direction of the control processor 7. The hard disk 51 stores the programs for receiving and demodulating the communication waves of various wave formats. The programs include demodulating programs each for implementing demodulation of the communication wave of a corresponding wave format in the DSP 61 and a control program defining a dividing rate in the PLD 42, a sampling speed in the A/D converter 3, and an orthogonal transform frequency, a band for the signal band limitation and a signal decimation rate in the HBF 41. Upon demodulation, the DSP 61 stores one of the demodulating programs stored in the hard disk 51 into an internal storage circuit of the DSP 61 and implements the demodulation of the inputted signal according to the demodulating program. The control program stored in the hard disk 51 is transferred to the PLD 42 via the DSP 61. The PLD 42 divides a signal of the crystal oscillator 43 according to the control program and feeds clock signals to the A/D converter 3 and the HBF 41, respectively. Thus, the supplied clock signals are defined by the control program.

The communication waves received at the antenna 1 are amplified by the signal amplifier 2 and then inputted into the A/D converter 3. The A/D converter 3 performs the sampling of the inputted signal according to the clock signal from the PLD 42 so as to carry out the quantization and the frequency conversion of the inputted signal. A signal from the A/D converter 3 is inputted into the HBF 41 where the signal is, according to the clock signal from the PLD 42, subjected to the orthogonal transform, the frequency conversion to the baseband, the signal band limitation and the signal decimation for calculation amount reduction in the DSP 61 and then outputted to the SRAM 44 as an I-Q signal. The SRAM 44 temporarily stores the inputted signal and, through designation of addresses of the clock signal from the PLD 42 and the inputted signal, converts the signal data into a format processable by the DSP 61. The DSP 61 demodulates the signal from the SRAM 44 according to the downloaded demodulating program. The demodulated signal is then converted into an analog signal by the D/A converter 8 and outputted from the speaker 9 as sound. When the wave format of the communication wave to be demodulated changes, the receiving and demodulating processing of the communication wave of a new wave format is achieved by downloading a corresponding demodulating program from the hard disk 51 under the direction of the control processor 7. For dealing with the advent of a new communication technique or data change of the communication wave format, addition of a new demodulating program or correction of the corresponding demodulating program can be carried out using an external storage medium or a signal received via the space.

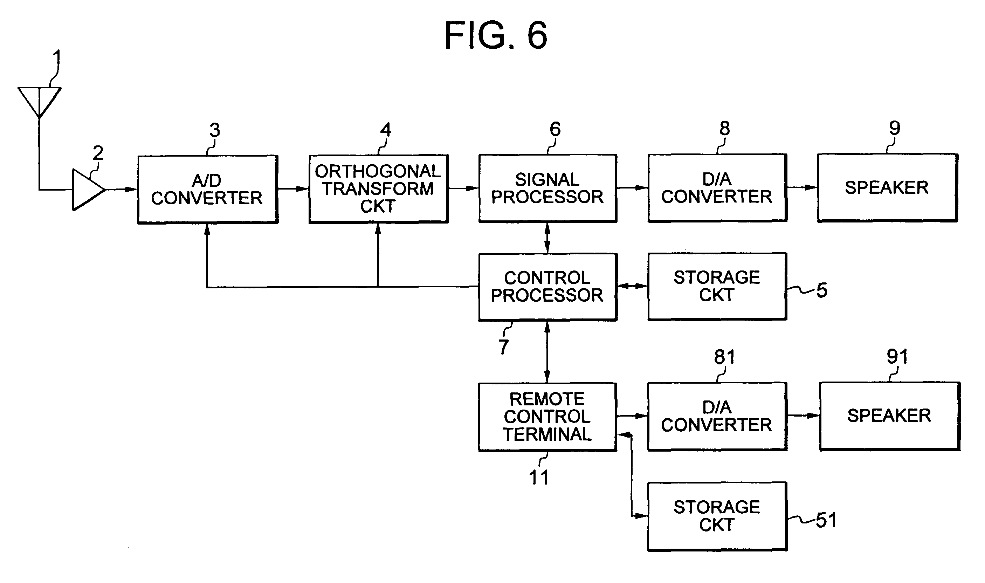

With reference to Fig. 6, the description will be made as regards a radio wave receiver according to a second preferred embodiment of the present invention.

In Fig. 6, a remote control terminal 11 is connected to the control processor 7 via a communication line 10. Thus, the radio wave receiver shown in Fig. 1 can be remote-controlled via the remote control terminal 11 so that a program download command can be given to the storage circuit 5 from the remote control terminal 11 for the receiving and demodulating processing of the communication wave. Further, when the existing communication technique is changed or when a new communication system appears, rewriting or correction of the demodulating program stored in the storage circuit 5 or addition of a new demodulating program into the storage circuit 5 can be achieved via the remote control terminal 11. Moreover, by transferring the demodulation result at the signal processor 6 to the remote control terminal 11 via the control processor 7 and the communication line 10 and using a D/A converter 81 at the side of the remote control terminal 11 to perform digital-to-analog conversion, a speaker 91 can output demodulated sound. In this case, the demodulated result can also be stored in a storage circuit 51. A LAN (Local Area Network) may be used as the communication line 10, a PC (Personal Computer) as the remote control terminal 11, and a hard disk of the PC, a floppy disk or a MO disk as the storage circuit 51.

The second preferred embodiment of the present invention can realize the remote control of the radio wave receiver including the program download and the data transfer, in addition to the effect achieved by the foregoing first preferred embodiment.

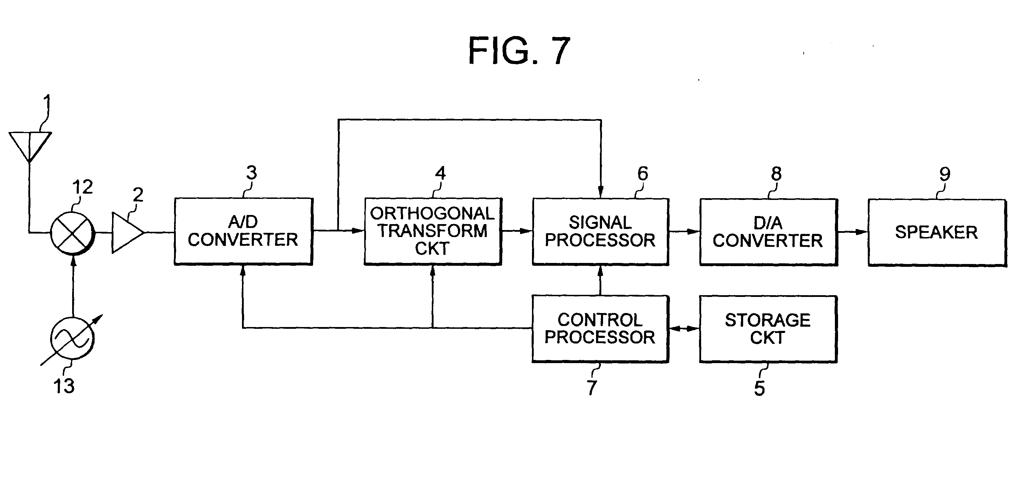

With reference to Fig. 7, the description will be made as regards a radio wave receiver according to a third preferred embodiment of the present invention.

In Fig. 7, a mixer 12 is provided between the antenna 1 and the signal amplifier 2, and a signal for frequency conversion can be inputted into the mixer 12 from a variable signal generator 13. The oscillation frequency of the variable signal generator 13 is controlled by the control processor 7 so that the wideband communication waves can be received according to the channelized reception technique. An output signal from the A/D converter 3 is inputted into the signal processor 6. The processing result at the signal processor 6 is fed back to the control processor 7.

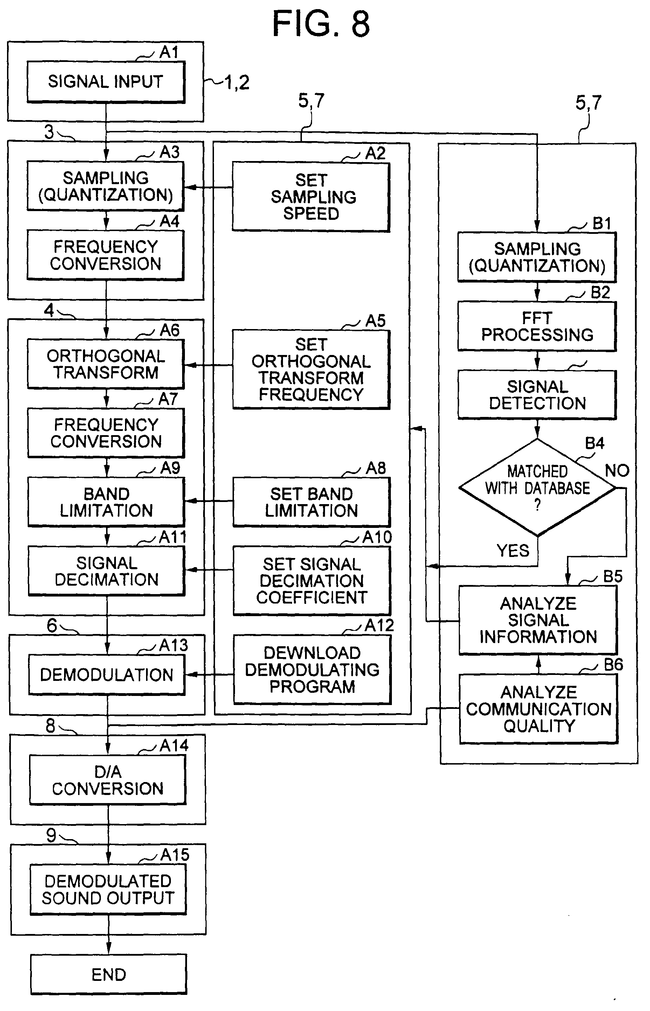

Now, the operation of the radio wave receiver shown in Fig. 7 will be described with reference to Figs. 7 and 8.

In the foregoing first preferred embodiment, the reception and demodulation of the communication wave can be performed when wave data of the communication wave to be demodulated is known. On the other hand, the third preferred embodiment is capable of automatically receiving and demodulating the communication wave of unknown data by using a technique of receiving the wideband communication waves, a technique of detecting a signal from the received communication waves, a technique of analyzing the detected signal and a technique of feeding back the analyzed result to the control processor for communication wave demodulation. Referring to Fig. 8, the wideband communication waves are converted in frequency by a scanning signal which is controlled in frequency by the variable signal generator 13. The output signal is subjected to quantization (converted into a digital signal) at the A/D converter 3 (B1) and then subjected to FFT processing (frequency analysis) at the signal processor 6 (B2). The frequency-analyzed signal is subjected to signal detection processing (B3). As the signal detection technique, there is available separation of a signal based on the signal strength (frequency axis and time axis), the signal bandwidth or the signal phase change. Then, the frequency of the detected signal is detected through the spectrum analysis and compared with the database of the storage circuit 5 storing frequency data of the communication waves to be dealt with (B4). If matched with the frequency data of one of the communication waves in the database, a corresponding receiving and demodulating program is downloaded for implementing the receiving and demodulating processing. On the other hand, if not matched with the database, signal information of the communication wave necessary for demodulation is analyzed (B5). Items to be analyzed include the carrier frequency, the wave format, the signal bandwidth, the modulation factor, the symbol rate, the signal waveform, time-dependent changes and frequency changes thereof, and others. Based on the result of the wave information analysis, the control processor 7 downloads a corresponding program necessary for reception and demodulation so that the receiving and demodulation processing is carried out. Simultaneously, the analysis result is stored in the storage circuit 5 so as to be added to the database. Using this database, when a signal from the same communication device is received again, the signal can be distinguished so that the reception and demodulation can be automatically performed. An output signal representing the demodulation result is subjected to communication quality analysis (B6) at the signal processor 6, and a result thereof is fed back to the control processor 7 so as to be reflected on a program for demodulation. At this time, the demodulation result (sound waveform in case of sound information) is added to the database of the storage circuit 5.

In addition to the effect achieved by the foregoing first preferred embodiment, the third preferred embodiment achieves an effect that multiband signals can be received from the wideband real radio wave environment, an effect that the signal is automatically detected from such a reception result, compared with the database and subjected to the receiving and demodulating processing, and an effect that an unknown signal can be received and demodulated by analyzing signal information thereof.

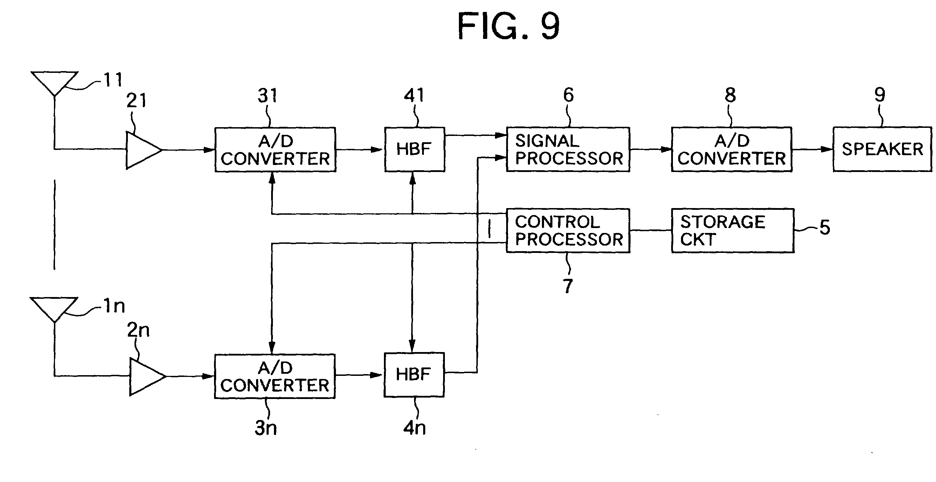

With reference to Fig. 9, the description will be made as regards a radio wave receiver according to a fourth preferred embodiment of the present invention.

In the radio wave receiver of Fig. 9, receiving antennas 11 to 1n, signal amplifiers 21 to 2n, A/D converters 31 to 3n and orthogonal transform circuits 41 to 4n are arranged, and phase components of a signal received at each antenna can be detected at the signal processor 6. With this arrangement, by downloading a program for estimating a radio wave coming direction, the coming direction of the communication wave to be demodulated can be estimated by the signal processor 6. Further, if the target communication wave is subjected to deterioration due to multipath error or fading, the sensitivity is suppressed with respect to the direction where unwanted waves come in, so as to reduce deterioration of the target communication wave. As a program algorithm for estimating the radio wave coming direction, Interfero or MUSIC may be considered, while the least square method or the maximum SNR (Signal to Noise Ratio) may be considered for the desensitization to the unwanted coming waves.

In addition to the effect achieved by the foregoing first preferred embodiment, the fourth preferred embodiment achieves an effect that the reception quality can be improved through the estimation of the communication wave coming direction and the desensitization to the unwanted coming waves.

As described above, by downloading a demodulating program corresponding to the target communication wave so as to change the characteristic of the radio wave receiver, the receiving and demodulating processing relative to the communication waves of various wave formats can be achieved. Thus, the radio wave receiver for receiving and demodulating the communication waves of various wave formats can be constructed with a single hardware structure, so that it is not necessary to use a plurality of demodulating circuits for the respective wave formats. Further, since the receiver is controlled by the program, the characteristic of the receiver can be changed flexibly. Thus, even if the communication wave data of the target wave format changes, it can be dealt with flexibly by changing the program.

The first effect is that the function or performance of the receiver can be easily changed and improved. Thus, even if data of the target communication wave format changes or the new communication technique appears, it can be dealt with flexibly so that the same receiver can be used continuously.

The reason thereof is that since the receiving and demodulating processing is realized through the software processing using the single common hardware structure, the function or performance of the receiver can be changed only by correcting or adding the demodulating program.

The second effect is that the integration of a plurality of receivers can be achieved. Thus, services of different kinds (including, for example, services of the same kind where protocol differs, such as the portable telephone services in Japan and U.S.A. and services of different kinds such as pocket bell and GPS receiver) can be dealt with by a single common receiver. Further, the size of the receiver can be reduced.

The reason thereof is that the receiving and demodulating processing is realized through the software processing using the single receiver irrespective of the wave format.

The third effect is that services which can be offered by the receiver and a personal computer can be combined so that various services can be realized.

The reason thereof is that since the processing is realized through the software processing, the function or performance of the receiver can be easily changed like changing that of the personal computer.

The fourth effect is that the calculation amount for signal processing in the demodulating processing can be reduced. Thus, the realtime receiving and demodulating processing can be realized.

The reason thereof is that the frequency conversion in the A/D converter, and the signal frequency conversion, the signal band limitation and the signal decimation in the orthogonal transform circuit are carried out before the demodulation processing.

The fifth effect is that the detection of the received communication wave, the data analysis thereof and the discrimination thereof can be achieved. Thus, the communication wave of unknown data can be detected from the wideband radio wave environment and demodulated.

The reason thereof is that the variable signal generator is provided to enable the channelized reception, and the means for implementing the frequency analysis of the received signal, the signal information analysis, the comparison with the database and the communication quality analysis are provided.

The sixth effect is that the long maintainability and reliability of the receiver can be improved.

The reason thereof is that since the processing is realized by the digital signal processing based on the software processing, the receiver is not liable to receive an influence of time-dependent deterioration of the hardware as opposed to the analog receiver in previous technique. Further, since the receiver is managed by the software, the maintenance thereof is easy.

**Claims**

1. A radio wave receiver for carrying out reception and demodulation of communication waves of a plurality of wave formats, said radio wave receiver comprising performing means for performing said reception and said demodulation through software processing.

2. A radio wave receiver as claimed in claim 1, further comprising:

analyzing means for analyzing a communication quality based on a result of said demodulation to produce an analyzed result; and

feed back means connected to said analyzing means and said performing means for feeding back said analyzed result to said performing means, said analyzed result being used for controlling said demodulation in said performing means.

3. A radio wave receiver as claimed in claim 1, further comprising:

a plurality of receiving antennas connected to said performing means; and
means connected to said receiving antennas for controlling characteristics of said receiving antennas to estimate a coming direction of a target one of said communication waves and to desensitize unwanted ones of said communication waves.

4. A radio wave receiver as claimed in claim 1 or 2, further comprising:

storing means for storing software programs each being usable in said software processing;
selecting means connected to said storing means for selecting one of said software programs; and
means connected to said selecting means for downloading said one of the software programs from said storing means for use in said software processing.

5. A radio wave receiver as claimed in claim 4, further comprising means connected to said storing means for, when changed with data of a target one of said wave formats, changing said one of the software programs to another one of said software programs stored in said storing means.

6. A radio wave receiver as claimed in claim 4, further comprising means connected to said storing means for adding a new program into said software programs when a communication wave of a new wave format appears, said new program corresponding to said new wave format.

7. A radio wave receiver as claimed in claim 4, further comprising means connected to said selecting means for changing said one of the software programs into another of said soft ware programs to vary a reception characteristic of said radio wave receiver by changing one of said programs.

8. A radio wave receiver for carrying out reception and demodulation of communication waves of a plurality of wave formats, said radio wave receiver comprising performing means for performing said reception and said demodulation by the use of a single common hardware structure.

9. A radio wave receiver as claimed in claim 8, further comprising:

analyzing means for analyzing a communication quality based on a result of said demodulation to produce an analyzed result; and
feed back means connected to said analyzing means and said performing means for feeding back said analyzed result to said performing means, said analyzed result being used for controlling said demodulation in said performing means.

10. A radio wave receiver as claimed in claim 8 or 9, further comprising:

a plurality of receiving antennas connected to said performing means; and
means connected to said receiving antennas for controlling characteristics of said receiving antennas to estimate a coming direction of a target one of said communication waves and to desensitize unwanted ones of said communication waves.

11. A radio wave receiver comprising:

means for monitoring a wideband radio wave environment; and
detecting means for detecting, as a detected signal, one of signals in said wideband radio wave environment.

12. A radio wave receiver as claimed in claim 11, further comprising:

analyzing means connected to said detecting means for analyzing a signal information of said detected signal to produce an analyzed result;
means connected to said analyzing means and responsive to said analyzed result for changing a function of receiving and demodulating processing of said radio wave receiver; and
means connected to said analyzing means for adding said analyzed result to a database included in said radio wave receiver.

13. A radio wave receiver as claimed in claim 12, further comprising:

comparing means connected to said database and said analyzing means for comparing said signal information of the detected signal with signal information previously stored in said data base to produce a compared result;

means connected to said comparing means for setting information for reception and demodulation of communication wave in said radio wave receiver in accordance with said compared result; and

means for discriminating the detected signal in accordance with said compared result.

**14.** A radio wave receiver comprising means for carrying out A/D conversion processing to simultaneously perform frequency conversion a received signal and quantization thereof.

**15.** A radio wave receiver as claimed in claim 14, wherein said frequency conversion is performed by an orthogonal transform processing, said radio wave receiver further comprising means for processing said received signal with a signal band limitation and said signal decimation.

**16.** A radio wave receiver comprising:

means for setting a speed for sampling, a frequency for orthogonal transform, a signal band limitation, and a signal decimation rate in accordance with a target one of communication waves; and

means for flexibly producing clock signals required for said sampling and said orthogonal transform.

**17.** A radio wave receiver for use in radio wave environment having communication waves of a plurality of wave formats, said radio wave receiver comprising a single common hardware structure which is operable through software processing as each of:

means for receiving, a received signal, one of signals in said wideband radio wave environment;

means for amplifying said received signal into an amplified signal;

means connected to said amplifying means for quantizing and frequency-converting said amplified signal into a quantized and frequency-converted signal;

means for frequency-converting said quantized and frequency-converted signal in orthogonal transform processing into an orthogonal-converted signal;

means for band-limiting said orthogonal-converted signal into a band-limited signal;

means for decimating said band-limited signal into a decimated signal;

means for demodulating said decimated signal into a demodulated signal;

means for digital-to-analog converting said demodulated signal into a digital-to-analog converted signal; and

means for outputting the digital-to-analog converted signal as sound information.

# FIG. 1

EP 0 987 824 A2

# FIG. 2

1,2 → SIGANL INPUT ~A1

5,7

SET SAMPLING SPEED ~A2

3 →
SAMPLING (QUANTIZATION) ~A3
FREQUENCY CONVERSION ~A4

ORTHOGONAL TRANSFORM ~A6

SET ORTHOGNAL TRANSFORM FREQUENCY ~A5

FREQUENCY CONVERSION ~A7

4 →
BAND LIMITATION ~A9

SET BAND LIMITATION ~A8

SIGNAL DECIMATION ~A11

SET SIGNAL DECIMATION COEFFICIENT ~A10

6 → DEMODULATION ~A13

DOWNLOAD DEMODULATING PROGRAM ~A12

8 → D/A CONVERSION ~A14

9 → DEMODULATED SOUND OUTPUT ~A15

END

# FIG. 3A

LEVEL

fs

0    fL   fH          2fH          f

# FIG. 3B

LEVEL

fs

0      fL   fH         2fH                              f

# FIG. 3C

LEVEL

fs      2fs   3fs          nfs

0           fL  fH                              f

# FIG. 3D

LEVEL

fs     2fs    3fs          nfs

0                                              f

EP 0 987 824 A2

$$\begin{cases} fc = 21.2[MHz] \\ SIGNAL\ BANDWIDTH = 200[KHz] \end{cases}$$

FIG. 4A

-13fs      fs      13fs

[MHz]

-21.2     0    1.6    20.8 21.2

200KHz

FIG. 4B

[MHz]

-2.0     -0.4 0 0.4     -2.0

200KHz   200KHz

FIG. 4C

[MHz]

-2.4   -1.6   -0.8   0   0.8   1.6   2.4

200KHz

FIG. 4D

[MHz]

200KHz

13

# FIG. 5

FIG. 6

9 SPEAKER

8 D/A CONVERTER

6 SIGNAL PROCESSOR

4 ORTHOGONAL TRANSFORM CKT

3 A/D CONVERTER

2

1

5 STORAGE CKT

7 CONTROL PROCESSOR

91 SPEAKER

81 D/A CONVERTER

11 REMOTE CONTROL TERMINAL

51 STORAGE CKT

# FIG. 7

EP 0 987 824 A2

# FIG. 8

A1
SIGNAL INPUT — 1,2

3

5,7 — 5,7

A3
SAMPLING (QUANTIZATION)

A2
SET SAMPLING SPEED

A4
FREQUENCY CONVERSION

B1
SAMPLING (QUANTIZATION)

4

A6
ORTHOGONAL TRANSFORM

A5
SET ORTHOGONAL TRANSFORM FREQUENCY

B2
FFT PROCESSING

A7
FREQUENCY CONVERSION

SIGNAL DETECTION

A9
BAND LIMITATION

A8
SET BAND LIMITATION

B4
MATCHED WITH DATABASE ? — NO

A11
SIGNAL DECIMATION

A10
SET SIGNAL DECIMATION COEFFICIENT

YES

6

B5
ANALYZE SIGNAL INFORMATION

A13
DEMODULATION

A12
DEWNLOAD DEMODULATING PROGRAM

B6
ANALYZE COMMUNICATION QUALITY

8

A14
D/A CONVERSION

9

A15
DEMODULATED SOUND OUTPUT

END

# FIG. 9

EP 0 987 824 A2

# FIG. 10

EP 0 987 824 A2